# EUROPÄISCHE PATENTSCHRIFT

(11) **EP 1 481 160 B1**
(45) Veröffentlichungstag und Bekanntmachung des Hinweises auf die Patenterteilung: **05.08.2009**
(21) Anmeldenummer: 02795042.7
(22) Anmeldetag: 23.12.2002
(51) Int. Cl.: F02M 61/16, F02M 69/04, F02M 69/54, F02M 55/02, F02B 23/10, F02M 61/20

(54) **BRENNSTOFFEINSPRITZSYSTEM**
FUEL INJECTION SYSTEM
SYSTEME D'INJECTION DE CARBURANT

(30) Priorität: 26.02.2002 DE 10208225
(43) Veröffentlichungstag der Anmeldung: 01.12.2004
(73) Patentinhaber: ROBERT BOSCH GMBH, 70442 Stuttgart (DE)
(72) Erfinder: MUELLER, Martin, 71696 Moeglingen (DE)
(74) Vertreter: Körfer, Thomas
(86) Internationale Anmeldenummer: PCT/DE2002/004735
(87) Internationale Veröffentlichungsnummer: WO 2003/072930

(56) Entgegenhaltungen:
- EP-A- 0 459 999
- DE-A- 10 024 258
- PATENT ABSTRACTS OF JAPAN vol. 1998, no. 01, 30. Januar 1998 (1998-01-30) & JP 09 250428 A (TOYOTA MOTOR CORP), 22. September 1997 (1997-09-22)

## Beschreibung

### Stand der Technik

Die Erfindung geht aus von einem Brennstoffeinspritzsystem nach der Gattung des Hauptanspruchs.

Aus der DE 196 42 653 C1 ist bereits ein Verfahren zur Bildung eines zündfähigen Brennstoff-/Luftgemisches bekannt. In den Zylindern von direkteinspritzenden Brennkraftmaschinen ist ein zündfähiges Brennstoff-/ Luftgemisch bildbar, indem in jedem von einem Kolben begrenzten Brennraum mittels eines Injektors bei Freigabe einer Düsenöffnung durch Abheben eines Ventilgliedes von einem die Düsenöffnung umfassenden Ventilsitz Brennstoff eingespritzt wird. Um unter allen Betriebsbedingungen der Brennkraftmaschine, insbesondere im Schichtladungsbetrieb, eine verbrauchs- und emissionsoptimierte innere Gemischbildung in jedem Betriebspunkt des gesamten Kennfeldes zu ermöglichen, ist vorgesehen, daß der Öffnungshub des Ventilgliedes und die Einspritzzeit variabel einstellbar sind.

Aus der DE 38 08 635 C2 ist eine Brennstoffeinspritzvorrichtung zum direkten Einspritzen von Brennstoff in den Zylinder einer gemischverdichtenden Brennkraftmaschine bekannt. Die Brennstoffeinspritzvorrichtung beinhaltet ein Brennstoffeinspritzventil, das in der Zylinderwandung mit Abstand zum Zylinderkopf und gegenüber der Auslaßöffnung angeordnet ist, und eine Ausgangsöffnung, wobei die Strahlachse des Brennstoffeinspritzventils auf den Bereich um die im Zylinderkopf angeordnete Zündkerze gerichtet ist. Das Brennstoffeinspritzventil weist eine magnetbetätigte Ventilnadel mit schraubenförmigen Drallnuten zum Erzeugen einer Drallströmung des Einspritzstrahls auf. Das Brennstoffeinspritzventil ist mit seiner Strahlachse auf den in der Zylinderkopfmitte angeordneten Zündpunkt gerichtet.

Weiterhin ist aus der US 5,941,207 eine Vorrichtung zum Einspritzen von Brennstoff in den Brennraum einer gemischverdichtenden, fremdgezündeten Brennkraftmaschine bekannt, bei der Brennstoff unter einem bestimmten Anfangswinkel kegelförmig in den Brennraum eingespritzt wird. Der eingespritzte Brennstoff füllt dabei die Brennkammer kegelförmig aus, wobei Effekte der Wandbenetzung weitgehend unterdrückt werden. Ein relativ flach ausgebildeter Kolben verformt die eingespritzte Brennstoffwolke während der Verdichtungsphase kugelförmig. Die kugelförmige Gemischwolke vermischt sich nur unwesentlich mit der zugeführten Luft und wird bei weiterer Verdichtung zur Funkenstrecke der Zündkerze geführt.

Aus der DE 198 27 219 A1 ist ein Brennstoffeinspritzventil für eine Brennkraftmaschine bekannt, welches eine Brennstoffstrahleinstellplatte aufweist. Diese besitzt erste Düsenlöcher, die entlang eines ersten Kreises angeordnet sind, der koaxial zu einer Mittelachse des Ventilkörpers ist. Weiterhin sind zweite Düsenlöcher vorhanden, die entlang eines zweiten Kreises angeordnet sind, der ebenfalls koaxial zur Mittelachse ist und einen Durchmesser hat, der größer als derjenige des ersten Kreises ist. Jede Lochachse der zweiten Düsenlöcher bildet einen spitzen Winkel mit einer Referenzebene, die senkrecht zur Mittelachse des Ventilkörpers ist, der kleiner als derjenige ist, der durch jede Lochachse der ersten Düsenlöcher mit der Referenzebene gebildet wird. Daher können Brennstoffzerstäubungen, die durch die ersten Düsenlöcher eingespritzt werden, weg von den Brennstoffzerstäubungen gerichtet werden, die durch die zweiten Düsenlöcher eingespritzt werden. Als ein Ergebnis stören sich die Brennstoffzerstäubungen, die durch die verschiedenen Kreise von Düsenlöchern eingespritzt werden, nicht gegenseitig.

In Dokument JP09250428 ist ein Brennstoffeinspritzventil beschrieben, dessen abgegebener Brennstoffstrahl eine variable Stärke der Verwirbelung aufweist, wobei mittels eines Druckes innerhalb eines Zylinders bzw. einer Verwirbelungskammer ein optimaler Sprühwinkel erreicht wird.

Nachteilig an den aus den obengenannten Druckschriften bekannten Verfahren bzw. Vorrichtungen zum Einspritzen von Brennstoff in den Brennraum einer gemischverdichtenden fremdgezündeten Brennkraftmaschine sind insbesondere die komplizierten Brennraumgeometrien, welche nötig sind, den eingespritzten Brennstoff mit der zugeführten Luft zu vermischen, ein zündfähiges Brennstoff-/Luftgemisch zu bilden und dieses zur Zündung in die Nähe der Funkenstrecke der Zündkerze zu transportieren. Derartige Brennraumgeometrien sind zum einen schwer herstellbar, zum anderen kann die Verbrennung in Bezug auf die Emission von Stickoxyden und den Verbrauch von Brennstoff nicht optimiert werden.

Weiterhin ist von Nachteil, daß in den meisten Fällen die Zündkerze direkt durch das Brennstoffeinspritzventil angespritzt wird. Dadurch ist die Zündkerze einerseits starken thermischen Schockbelastungen ausgesetzt, andererseits lagert sich Ruß auf den Zündkerzenelektroden ab, wodurch die Lebensdauer der Zündkerze erheblich beschränkt wird.

Insbesondere ist an dem aus der DE 198 27 219 A1 bekannten Brennstoffeinspritzventil von Nachteil, daß der durch die unterschiedlichen Einspritzwinkel in den Brennraum eingespritzte Brennstoff größtenteils auf die Wände des Brennraums bzw. den Kolben auftrifft, dort abkühlt und somit nur unter hoher Schadstoffemission bzw. Rußentwicklung verbrannt werden kann.

### Vorteile der Erfindung

Das erfindungsgemäße Brennstoffeinspritzsystem mit den kennzeichnenden Merkmalen des Hauptanspruchs hat demgegenüber den Vorteil, daß die in den Brennraum der Brennkraftmaschine eingespritzte Gemischwolke durch eine gezielte Druckveränderung vor dem Drallelement des Brennstoffeinspritzventils so beeinflußbar ist, daß die Gemischwolke die Zündkerze nur am Ende des Einspritzvorgangs erreicht.

Durch die in den Unteransprüchen aufgeführten Maßnahmen sind vorteilhafte Weiterentwicklungen des im Hauptanspruch angegebenen Brennstoffeinspritzsystems möglich.

Von Vorteil ist insbesondere, daß die Drucksteuerung in einfacher Weise durch eine Kombination eines 2/2-Wegeventils und einer Drosselstelle zwischen dem Brennstoffeinspritzventil und der Förderpumpe erfolgen kann. Je nach der Schaltstellung des 2/2-Wegeventils kann ein Druckabfall vor dem Drallelement erzielt werden.

Vorteilhafterweise kann die Drucksteuerung auch mittels einer Abbremsung der Ventilnadel des Brennstoffeinspritzventils vor dem Aufsetzen am Dichtsitz erfolgen, da dadurch ebenfalls eine Drosselung und damit ein Druckabfall mit einer nachfolgenden Erweiterung des Öffnungswinkels α der Gemischwolke ermöglicht wird.

### Zeichnung

Ausführungsbeispiele der Erfindung sind in der Zeichnung vereinfacht dargestellt und in der nachfolgenden Beschreibung näher erläutert. Es zeigen:
- Fig. 1: einen Längsschnitt durch ein Ausführungsbeispiel eines erfindungsgemäßen Brennstoffeinspritzsystems mit einer im Brennraum erzeugten Gemischwolke,
- Fig. 2A: eine teilweise geschnittene Ansicht eines ersten Ausführungsbeispiels eines zur Verwendung in einem erfindungsgemäßen Brennstoffeinspritzsystem geeigneten Brennstoffeinspritzventils,
- Fig. 2B: einen Schnitt durch ein zweites Ausführungsbeispiel eines zur Verwendung in einem erfindungsgemäßen Brennstoffeinspritzsystem geeigneten Brennstoffeinspritzventils, und
- Fig. 3: eine schematische Darstellung der Geschwindigkeitskomponenten des Brennstoffs beim Austritt aus dem Brennstoffeinspritzventil.

### Beschreibung der Ausführungsbeispiele

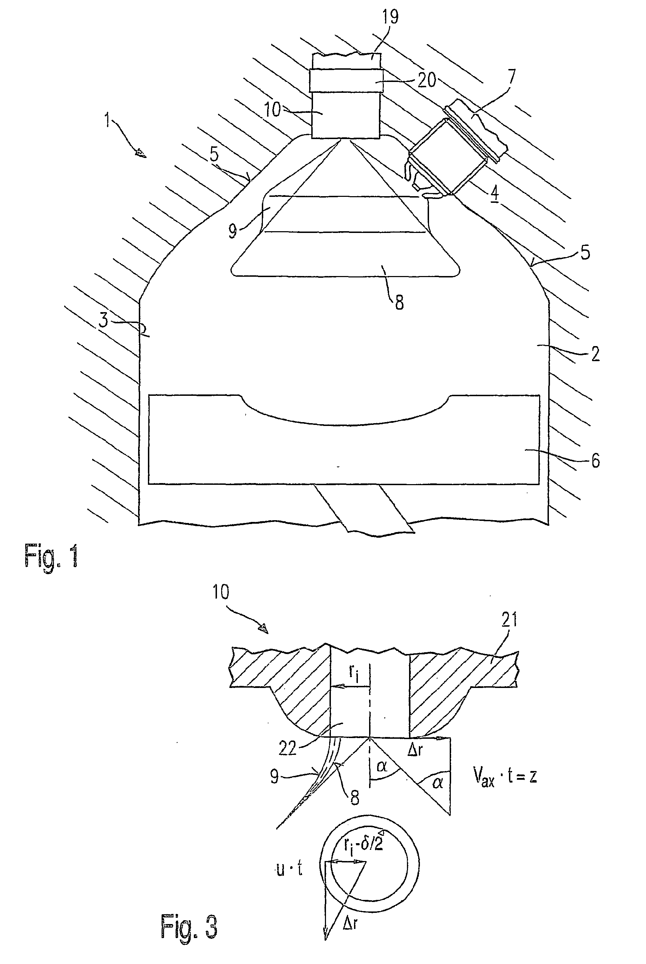

Fig. 1 zeigt in einer auszugsweisen, schematisierten Schnittdarstellung ein Ausführungsbeispiel eines erfindungsgemäßen Brennstoffeinspritzsystems 1 für eine gemischverdichtende fremdgezündete Brennkraftmaschine.

Das Brennstoffeinspritzsystem 1 umfaßt einen Brennraum 2, welcher durch Zylinderwandungen 3, einen Zylinderkopf 4, welcher Firstschrägen 5 aufweist, und einen Kolben 6 begrenzt ist. Eine Zündkerze 7 ist z. B. seitlich in den Brennraum 2 hineinragend angeordnet. Ein Brennstoffeinspritzventil 10 ist zwischen den Firstschrägen 5 so angeordnet, daß Brennstoff in Form einer beispielsweise kegelförmigen Gemischwolke 8, 9 in den Brennraum 2 eingespritzt wird.

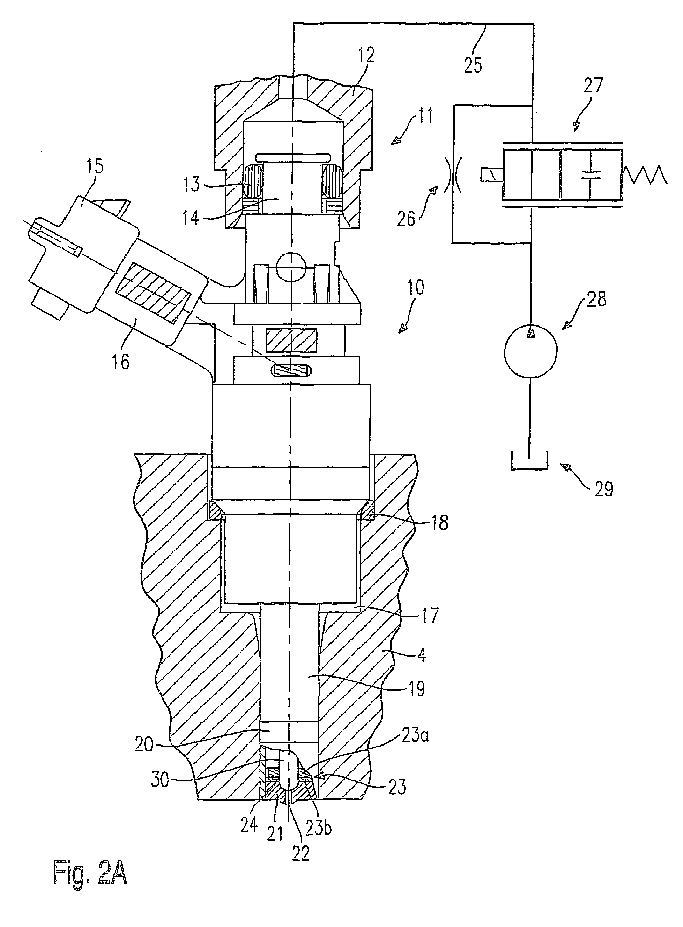

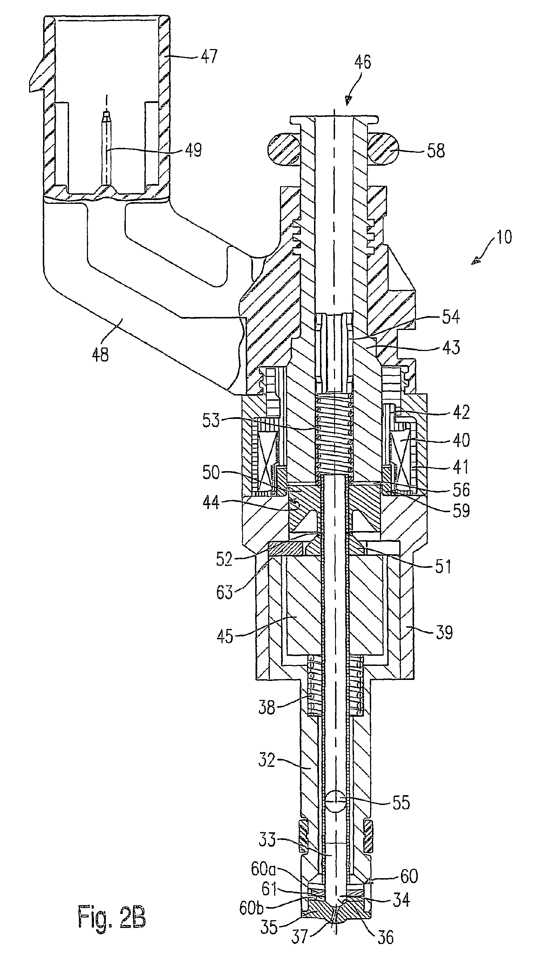

Um die oben angesprochenen Mängel in Bezug auf die Stöchiometrie der Gemischwolke 8, 9 sowie des direkten Anspritzens der Zündkerze 7 zu beheben, ist das Brennstoffeinspritzsystem 1 erfindungsgemäß so ausgelegt, daß das Brennstoffeinspritzventil 10 mit unterschiedlichen Brennstoffdrücken betrieben werden kann. Durch diese Maßnahme kann eine erste Gemischwolke 8 im Brennraum 2 erzeugt werden, die zunächst eine große Penetration und einen geringen Öffnungswinkel α aufweist, während beim Schließvorgang des Brennstoffeinspritzventils 10 kurzzeitig eine zweite Gemischwolke 9 mit einem größeren Öffnungswinkel α erzeugt wird, welche die Zündkerze 7 im Bereich der Elektroden streift und somit zündfähiges Gemisch zur Funkenstrecke der Zündkerze 7 transportiert. Ausführungsbeispiele von Brennstoffeinspritzventilen 10, welche sich für diese Betriebsart eignen, sind in den Fig. 2A und 2B dargestellt und im folgenden beschrieben.

Fig. 2A zeigt eine schematisierte teilweise geschnittene Ansicht eines ersten Ausführungsbeispiels eines Brennstoffeinspritzventils 10, welches zur Verwendung in dem erfindungsgemäß ausgestalteten Brennstoffeinspritzsystem 1 geeignet ist.

Das Brennstoffeinspritzventil 10 ist dabei in Form eines direkt einspritzenden Brennstoffeinspritzventils 10 ausgeführt, das zum direkten Einspritzen von Brennstoff in den Brennraum 2 der gemischverdichtenden, fremdgezündeten Brennkraftmaschine dient. Das Brennstoffeinspritzventil 10 weist an einem zulaufseitigen Ende 11 eine Steckverbindung zu einer Brennstoffverteilerleitung 12 auf, die durch eine Dichtung 13 zwischen der Brennstoffverteilerleitung 12 und einem Zuleitungsstutzen 14 des Brennstoffeinspritzventils 10 abgedichtet ist. Das Brennstoffeinspritzventil 10 verfügt über einen elektrischen Anschluß 15 für die elektrische Kontaktierung zur Betätigung des Brennstoffeinspritzventils 10. Das Brennstoffeinspritzventil 10 ist zumindest in seinem den Zylinderkopf 4 überragenden Teil mit einer Kunststoffumspritzung 16 versehen, welche auch den elektrischen Anschluß 15 umgibt.

Das Brennstoffeinspritzventil 10 ist durch nicht weiter dargestellte Maßnahmen, wie z. B. eine Spannpratze, im Zylinderkopf 4 fixiert und gegen Verdrehen gesichert. In einer Aufnahmebohrung 17 ist ein Elastomerring 18 zur Zentrierung und Lagerung des Brennstoffeinspritzventils 10 vorgesehen. An einem Düsenkörper 19 des Brennstoffeinspritzventils 10 ist ein Dichtring 20 vorgesehen, der das Brennstoffeinspritzventil 10 gegen den Zylinderkopf 4 der Brennkraftmaschine abdichtet. In einem Ventilsitzkörper 21 des Brennstoffeinspritzventils 10 ist zumindest eine Abspritzöffnung 22 ausgebildet, durch welche der Brennstoff in den Brennraum 2 abgespritzt wird. Zuströmseitig des Ventilsitzkörpers 21 ist eine Drallvorrichtung 23 angeordnet, welche beispielsweise scheibenförmig ausgeführt sein kann. Die Drallvorrichtung 23 umfaßt ein Führungselement 23a und eine Drallscheibe 23b, welche zwischen dem Führungselement 23a und dem Ventilsitzkörper 21 angeordnet ist. Die Drallscheibe 23b weist eine Drallkammer 24 auf, welche von der Ventilnadel 30 durchgriffen wird.

Die Brennstoffverteilerleitung 12 setzt sich in einer Brennstoffleitung 25 fort, in welche beispielsweise eine Drosselstelle 26 und ein 2/2-Wegeventil 27 parallel zueinander eingesetzt sind. Von einer Förderpumpe 28 aus einem Tank 29 geförderter Brennstoff durchfließt je nach Schaltstellung des 2/2-Wegeventils 27 entweder ungedrosselt das 2/2-Wegeventil 27 oder die Drosselstelle 26, so daß vor der Drallvorrichtung 23 des Brennstoffeinspritzventils 10 unterschiedliche Drücke anliegen.

Wird das Brennstoffeinspritzventil 10 betätigt, hebt eine Ventilnadel 30 vom Ventilsitzkörper 21 ab, so daß Brennstoff durch die Drallscheibe 23b in die Drallkammer 24 strömt. Bedingt durch das Volumen der Drallkammer 24 dauert es nach dem Öffnen des Brennstoffeinspritzventils 10 einige Zeit, bis in der Drallkammer 24 und in der Abspritzöffnung 22 die Umfangsgeschwindigkeit erreicht ist, die durch die Strömungsgeschwindigkeit in der Drallkammer 24 vorgegeben ist. Wird bei voll ausgebildeter Drallströmung der Brennstoffzufluß verringert, fließt durch die Abspritzöffnung 22 zunächst noch drallstarker Brennstoff mit hoher Umfangsgeschwindigkeit aus der Drallkammer 24 mit geringer Axialgeschwindigkeit ab, wobei kurzzeitig ein größerer Öffnungswinkel α der eingespritzten Gemischwolke 9 erzielt wird. Wenn das drallstarke Brennstoffvolumen abgeflossen ist, wird der Öffnungswinkel α der Gemischwolke 8 wieder kleiner.

Im vorliegenden ersten Ausführungsbeispiel kann die Reduzierung des Brennstoffdrucks durch die Anordnung des 2/2-Wegeventils 27 und der parallelen Drosselstelle 26 erfolgen. Befindet sich das 2/2-Wegeventil 27 in seiner Offenstellung, wie in Fig. 2 dargestellt, steht der Brennstoffdruck unvermindert vor der Drallvorrichtung 23 an. Wird das 2/2-Wegeventil 27 geschlossen, strömt der Brennstoff durch die Drosselstelle 26, was einen Druckabfall vor der Drallvorrichtung 23 bewirkt.

Fig. 2B zeigt eine Schnittdarstellung eines zweiten Ausführungsbeispiels eines zur Verwendung in dem erfindungsgemäß ausgestalteten Brennstoffeinspritzsystem 1 geeigneten Brennstoffeinspritzventils 10. Zur Wahrung der Übersichtlichkeit wurden neue Bezugszeichen eingeführt, welche nicht mit den Bezugszeichen des ersten Ausführungsbeispiels übereinstimmen.

Das Brennstoffeinspritzventil 10 besteht aus einem Düsenkörper 32, in welchem eine Ventilnadel 33 angeordnet ist. Die Ventilnadel 33 steht mit einem Ventilschließkörper 34 in Wirkverbindung, der mit einer auf einem Ventilsitzkörper 35 angeordneten Ventilsitzfläche 36 zu einem Dichtsitz zusammenwirkt. Bei dem Brennstoffeinspritzventil 10 handelt es sich im Ausführungsbeispiel um ein nach innen öffnendes Brennstoffeinspritzventil 10, welches über eine Abspritzöffnung 37 verfügt. Der Düsenkörper 32 erstreckt sich in einen Außenpol 39 einer Magnetspule 40. Die Magnetspule 40 ist in einem Spulengehäuse 41 gekapselt und auf einen Spulenträger 42 gewickelt, welcher an einem Innenpol 43 der Magnetspule 40 anliegt. Der Innenpol 43 und der Außenpol 39 sind durch eine Verengung 56 voneinander getrennt und miteinander durch ein nicht ferromagnetisches Verbindungsbauteil 59 verbunden. Die Magnetspule 40 wird über eine Leitung 49 von einem über einen elektrischen Steckkontakt 47 zuführbaren elektrischen Strom erregt. Der Steckkontakt 47 ist von einer Kunststoffummantelung 48 umgeben, die am Innenpol 43 angespritzt sein kann.

Die Ventilnadel 33 ist in einer geschlitzten Anschlagscheibe 63 geführt, welche ringförmig auf dem Anker 50 ausgeführt ist. Der Anker 50 ist seinerseits durch einen Führungsring 44, welcher in Form eines ringförmigen Bundes auf dem Anker 50 ausgebildet ist, in dem Verbindungsbauteil 59 geführt. Ein Anschlagkörper 45 ist axial beweglich auf der Ventilnadel 33 angeordnet. An der einen Seite des Anschlagkörpers 45 stützt sich eine Feder 38 ab, während an der anderen Seite ein Flansch 51 angeordnet ist. Der Anker 50, der mit dem Innenpol 43 und dem Außenpol 39 der Magnetspule 40 zusammenwirkt, ist einteilig mit dem Flansch 51 ausgeführt und durch eine Schweißnaht 52 mit der Ventilnadel 33 verbunden. Auf dem Anker 50 stützt sich eine Rückstellfeder 53 ab, welche in der vorliegenden Bauform des Brennstoffeinspritzventils 10 durch eine Hülse 54 auf Vorspannung gebracht wird. Der Brennstoff, welcher über eine zentrale Brennstoffzufuhr 46 zugeführt wird, wird durch die Ventilnadel 33, welche hohlzylindrisch ausgebildet ist, sowie durch Bohrungen 55 in der Ventilnadel 33 zur Abspritzöffnung 37 geleitet. Das Brennstoffeinspritzventil 10 ist durch eine Dichtung 58 gegen eine in diesem Ausführungsbeispiel nicht weiter dargestellte Brennstoffverteilerleitung abgedichtet.

Zuströmseitig des Ventilsitzkörpers 35 ist ein Drallelement 60 angeordnet, welches ein Führungselement 60a und eine Drallscheibe 60b umfaßt. Die Ventilnadel 33 durchgreift das Drallelement 60 beispielsweise im Bereich einer Drallkammer 61, welche die gleiche Funktion wie im ersten Ausführungsbeispiel erfüllt.

Beim Öffnen des Brennstoffeinspritzventils 10 wird der Anker 50 entgegen der Kraft der Rückstellfeder 53 an den Innenpol 43 gezogen, wodurch auch die Ventilnadel 33 in einer Öffnungsrichtung vom Dichtsitz abgehoben wird. Der Anschlagkörper 45 wird durch die Kraft der Feder 38 ebenfalls in einer Öffnungsrichtung bewegt, bis er an eine geschlitzte Anschlagscheibe 63 anschlägt.

Beim Schließen des Brennstoffeinspritzventils 10 schlägt der Anker 50 nach Durchlaufen eines Teilhubs an dem Anschlagkörper 45 an, wodurch die Schließbewegung der Ventilnadel kurzzeitig abgebremst oder sogar zum Stillstand gebracht wird. Durch die Drosselung der Strömung im Dichtsitz wird der Brennstofffluß reduziert und dadurch kurzzeitig der Öffnungswinkel α der abgespritzten Gemischwolke 8, 9 vergrößert. Nach dem Anschlagen des Ankers 50 am Anschlagkörper 45 bewegen sich der Anker 50, der Anschlagkörper 45 und die Ventilnadel 33 gemeinsam in Schließrichtung, bis der Ventilschließkörper 34 auf der Ventilsitzfläche 36 aufsetzt. Der Anschlagkörper 45 schwingt dann im weiteren Verlauf gegenüber der Ventilnadel 33 durch und schlägt am Düsenkörper 32 an. Die Feder 38 beaufschlagt den Anschlagkörper 45 schließlich wieder so, daß er am Flansch 51 anliegt.

Wie im ersten Ausführungsbeispiel dauert es bedingt durch das Volumen der Drallkammer 61 nach dem Öffnen des Brennstoffeinspritzventils 10 einige Zeit, bis in der Drallkammer 61 und in der Abspritzöffnung 37 die Umfangsgeschwindigkeit erreicht ist, die durch die Strömungsgeschwindigkeit in dem Drallkanal 62 vorgegeben ist. Wird bei voll ausgebildeter Drallströmung der Brennstoffzufluß verringert, fließt durch die Abspritzöffnung 37 zunächst noch drallstarker Brennstoff mit hoher Umfangsgeschwindigkeit aus der Drallkammer 61 mit geringer Axialgeschwindigkeit ab, wobei kurzzeitig ein größerer Öffnungswinkel α der eingespritzten Gemischwolke 9 erzielt wird. Wenn das drallstarke Brennstoffvolumen abgeflossen ist, wird der Öffnungswinkel α der Gemischwolke 8 wieder kleiner. Der gewünschte Effekt kann auch durch einen kurzzeitigen Haltestrom beispielsweise bei piezoelektrisch oder elektromagnetisch betätigbaren Brennstoffeinspritzventilen 10 erzielt werden, indem durch eine erneute Bestromung während des Schließvorgangs die Ventilnadel 30 in einer Teilhubstellung gehalten wird, wodurch eine Drosselung der Strömung im Dichtsitz auftritt, durch welche der Durchfluß reduziert und der Öffnungswinkel α der Gemischwolke 8, 9 kurzzeitig vergrößert wird.

Fig. 3 zeigt zur Erläuterung des oben angesprochenen Effektes eine schematische Darstellung der Geschwindigkeitskomponenten des Brennstoffstrahls, welcher die Abspritzöffnung 22 des Brennstoffeinspritzventils 10 verläßt. Da der Öffnungswinkel α von dem Verhältnis der Umfangsgeschwindigkeit der Brennstoffströmung zur axialen Geschwindigkeit abhängt, wird bei gegebener axialer Geschwindigkeit bei einer hohen Umfangsgeschwindigkeit der Öffnungswinkel α der Gemischwolke 8, 9 ebenfalls größer. Dabei gilt folgende Beziehung: tan α = u/vₐₓ, wobei u die Umfangsgeschwindigkeit und vₐₓ die axiale Geschwindigkeit des Brennstoffs bezeichnet. In Fig. 3 bedeuten: rᵢ der Durchmesser der Abspritzöffnung 22, z die zurückgelegte axiale Strecke nach der Zeit t, Δr die zurückgelegte gesamte Strecke nach der Zeit t und rᵢ - δ/2 die radiale Komponente von Δr.

Die Erfindung ist nicht auf das dargestellte Ausführungsbeispiel beschränkt und z. B. auch für nach außen öffnende Brennstoffeinspritzventile 10 und unterschiedliche Anordnungen von Zündkerzen 7 und Brennstoffeinspritzventilen 10 im Zylinderkopf 4 einer Brennkraftmaschine anwendbar.

## Patentansprüche

1. Brennstoffeinspritzsystem (1) für Brennkraftmaschinen mit einem in einen Brennraum (2) ragenden Brennstoffeinspritzventil (10),
wobei der Brennraum (2) von einer Zylinderwandung (3) und einem Zylinderkopf (4) begrenzt ist, mit einem Kolben (6), der in der Zylinderwandung (3) geführt ist, und mit einer in den Brennraum (2) ragenden Zündkerze (7),
wobei das Brennstoffeinspritzventil (10) eine Abspritzöffnung (22; 37) sowie eine zuströmseitig der Abspritzöffnung (22; 37) angeordnete Drallvorrichtung (23; 60) aufweist,
wobei ein Öffnungswinkel (α) einer durch das Brennstoffeinspritzventil (10) in den Brennraum (2) eingespritzten Gemischwolke (8, 9) durch die Variation des Drucks des der Drallvorrichtung (23; 60) des Brennstoffeinspritzventils (10) zugeleiteten Brennstoffs veränderbar ist und
wobei ein Brennstoffzuleitungsstutzen (14) des Brennstoffeinspritzventils (10) mit einer Brennstoffleitung (25) in Verbindung steht, in welche Brennstoff durch eine Förderpumpe (28) aus einem Tank (29) gefördert wird,
**dadurch gekennzeichnet,**
**dass** in der Brennstoffleitung (25) zwischen dem Brennstoffeinspritzventil (10) und der Förderpumpe (28) eine Drosselstelle (26) und ein Ventil (27) angeordnet sind.

2. Brennstoffeinspritzsystem nach Anspruch 1,
**dadurch gekennzeichnet,**
**daß** der Öffnungswinkel (α) durch Verringern des Drucks des der Drallvorrichtung (23; 60) des Brennstoffeinspritzventils (10) zugeleiteten Brennstoffs vergrößerbar ist.

3. Brennstoffeinspritzsystem nach Anspruch 1 oder 2,
**dadurch gekennzeichnet,**
**daß** das Ventil (27) als 2/2-Wegeventil (27) ausgebildet ist, welches eine Offenstellung und eine Geschlossenstellung einnehmen kann.

4. Brennstoffeinspritzsystem nach Anspruch 3,
**dadurch gekennzeichnet,**
**daß** in der Offenstellung des 2/2-Wegeventils (27) der Brennstoff durch das 2/2-Wegeventil (27) ungedrosselt zum Brennstoffeinspritzventil (10) strömt.

5. Brennstoffeinspritzsystem nach Anspruch 3 oder 4,
**dadurch gekennzeichnet,**
**daß** in der Geschlossenstellung des 2/2-Wegeventils (27) der Brennstoff durch die Drosselstelle (26) zum Brennstoffeinspritzventil (10) strömt.

6. Brennstoffeinspritzsystem nach einem der Ansprüche 3 bis 5,
**dadurch gekennzeichnet,**
**daß** der an der Drallvorrichtung (23) des Brennstoffeinspritzventils (10) anliegende Brennstoffdruck von der Schaltstellung des 2/2-Wegeventils (27) abhängt.

7. Brennstoffeinspritzsystem nach Anspruch 1 oder 2,
**dadurch gekennzeichnet,**
**daß** eine Druckverminderung vor der Drallvorrichtung (60) des Brennstoffeinspritzventils (10) durch ein Abbremsen der Ventilnadel (33) beim Schließen des Brennstoffeinspritzventils (10) erzielbar ist.

8. Brennstoffeinspritzsystem nach Anspruch 7,
**dadurch gekennzeichnet,**
**daß** die Ventilnadel (33) beim Schließvorgang an einem Anschlagkörper (45), welcher abströmseitig eines Ankers (50) an der Ventilnadel (33) angeordnet ist, anschlägt.

9. Brennstoffeinspritzsystem nach Anspruch 8,
**dadurch gekennzeichnet,**
**daß** der Anschlagkörper (45) axial verschiebbar an der Ventilnadel (33) angeordnet ist.

10. Brennstoffeinspritzsystem nach Anspruch 9,
**dadurch gekennzeichnet,**
**daß** der Anker (50) über einen mit der Ventilnadel (33) verschweißten Flansch (51) mit dem Anschlagkörper (45) in Wirkverbindung steht.

11. Brennstoffeinspritzsystem nach einem der Ansprüche 7 bis 10,
**dadurch gekennzeichnet,**
**daß** sich der Anschlagkörper (45) über eine Feder (38) in einem Düsenkörper (32) des Brennstoffeinspritzventils (10) abstützt.

## Claims

1. Fuel injection system (1) for internal combustion engines, having a fuel injection valve (10) that projects into a combustion chamber (2),
with the combustion chamber (2) being delimited by a cylinder wall (3) and a cylinder head (4), having a piston (6) that is guided in the cylinder wall (3), and having a spark plug (7) that projects into the combustion chamber (2),
with the fuel injection valve (10) having an ejection opening (22; 37) and a swirl device (23; 60) that is arranged at the inflow side of the ejection opening (22, 37),
with it being possible for an opening angle (α) of a mixture cloud (8, 9) that is injected into the combustion chamber (2) by the fuel injection valve (10) to be varied by varying the pressure of the fuel that is conducted to the swirl device (23; 60) of the fuel injection valve (10), and
with a fuel inlet pipe stub (14) of the fuel injection valve (10) being connected to a fuel line (25) into which fuel is fed from a tank (29) by means of a feed pump (28),
**characterized**
**in that** a throttle point (26) and a valve (27) are arranged in the fuel line (25) between the fuel injection valve (10) and the feed pump (28).

2. Fuel injection system according to Claim 1,
**characterized**
**in that** the opening angle (α) can be enlarged by reducing the pressure of the fuel that is conducted to the swirl device (23; 60) of the fuel injection valve (10).

3. Fuel injection system according to Claim 1 or 2,
**characterized**
**in that** the valve (27) is embodied as a 2/2 directional control valve (27) that can assume an open position and a closed position.

4. Fuel injection system according to Claim 3,
**characterized**
**in that,** when the 2/2 directional control valve (27) is in the open position, the fuel flows unthrottled through the 2/2 directional control valve (27) to the fuel injection valve (10).

5. Fuel injection system according to Claim 3 or 4,
**characterized**
**in that,** when the 2/2 directional control valve (27) is in the closed position, the fuel flows through the throttle point (26) to the fuel injection valve (10).

6. Fuel injection system according to one of Claims 3 to 5,
**characterized**
**in that** the fuel pressure that is applied to the swirl device (23) of the fuel injection valve (10) is dependent on the switching position of the 2/2 directional control valve (27).

7. Fuel injection system according to Claim 1 or 2,
**characterized**
**in that** a pressure reduction can be obtained upstream of the swirl device (60) of the fuel injection device (10) by means of a deceleration of the valve needle (33) as the fuel injection valve (10) is closed.

8. Fuel injection system according to Claim 7,
**characterized**
**in that** the valve needle (33), during the closing process, abuts against a stop body (45) that is arranged at the outflow side of an armature (50) on the valve needle (33).

9. Fuel injection system according to Claim 8,
**characterized**
**in that** the stop body (45) is arranged in an axially movable manner on the valve needle (33).

10. Fuel injection system according to Claim 9,
**characterized**
**in that** the armature (50) is operatively connected to the stop body (45) by means of a flange (51) that is welded to the valve needle (33).

11. Fuel injection system according to one of Claims 7 to 10,
**characterized**
**in that** the stop body (45) is supported by means of a spring (38) in a nozzle body (32) of the fuel injection valve (10).

## Revendications

1. Système d'injection de carburant (1) pour moteurs à combustion interne avec une soupape d'injection de carburant (10) pénétrant dans une chambre de combustion (2),
la chambre de combustion (2) étant limitée par une paroi cylindrique (3) et une culasse (4), avec un piston (6) qui est guidé dans la paroi cylindrique (3) et avec une bougie d'allumage (7) saillant dans la chambre de combustion (2),
la soupape d'injection de carburant (10) présentant une ouverture de pulvérisation (22 ; 37) ainsi qu'un dispositif de tourbillonnement (23 ; 60) disposé du côté de l'afflux de l'ouverture de pulvérisation (22 ; 37),
un angle d'ouverture (α) d'un nuage de mélange (8, 9) injecté dans la chambre de combustion (2) par la soupape d'injection de carburant (10) pouvant être modifié par la variation de la pression du carburant acheminé au dispositif de tourbillonnement (23 ; 60) de la soupape d'injection de carburant (10) et
une tubulure d'alimentation en carburant (14) de la soupape d'injection de carburant (10) étant en liaison avec une conduite de carburant (25), dans laquelle du carburant est refoulé par une pompe de refoulement (28) hors d'un réservoir (29),
**caractérisé en ce que**
dans la conduite de carburant (25) entre la soupape d'injection de carburant (10) et la pompe de refoulement (28) sont disposés un étranglement (26) et une soupape (27).

2. Système d'injection de carburant selon la revendication 1,
**caractérisé en ce que**
l'angle d'ouverture (α) peut être agrandi en réduisant la pression du carburant acheminé au dispositif de tourbillonnement (23 ; 60) de la soupape d'injection de carburant (10).

3. Système d'injection de carburant selon la revendication 1 ou 2,
**caractérisé en ce que**
la soupape (27) est réalisée sous forme de soupape à 2/2 voies (27), qui peut prendre une position ouverte et une position fermée.

4. Système d'injection de carburant selon la revendication 3,
**caractérisé en ce que**
dans la position ouverte de la soupape à 2/2 voies (27), le carburant s'écoule à travers la soupape à 2/2 voies (27) sans étranglement jusqu'à la soupape d'injection de carburant (10).

5. Système d'injection de carburant selon la revendication 3 ou 4,
**caractérisé en ce que**
dans la position fermée de la soupape à 2/2 voies (27), le carburant s'écoule à travers l'étranglement (26) jusqu'à la soupape d'injection de carburant (10).

6. Système d'injection de carburant selon l'une quelconque des revendications 3 à 5,
**caractérisé en ce que**
la pression de carburant appliquée au dispositif de tourbillonnement (23) de la soupape d'injection de carburant (10) dépend de la position de commutation de la soupape à 2/2 voies (27).

7. Système d'injection de carburant selon la revendication 1 ou 2,
**caractérisé en ce**
**qu'**une réduction de la pression avant le dispositif de tourbillonnement (60) de la soupape d'injection de carburant (10) peut être obtenue en freinant l'aiguille de soupape (33) lors de la fermeture de la soupape d'injection de carburant (10).

8. Système d'injection de carburant selon la revendication 7,
**caractérisé en ce que**
l'aiguille de soupape (33) bute lors de l'opération de fermeture contre un corps de butée (45) qui est disposé en aval d'une armature (50) sur l'aiguille de soupape (33).

9. Système d'injection de carburant selon la revendication 8,
**caractérisé en ce que**
le corps de butée (45) est disposé de manière déplaçable axialement sur l'aiguille de soupape (33).

10. Système d'injection de carburant selon la revendication 9,
**caractérisé en ce que**
l'armature (50) est en liaison fonctionnelle avec le corps de butée (45) par le biais d'une bride (51) soudée à l'aiguille de soupape (33).

11. Système d'injection de carburant selon l'une quelconque des revendications 7 à 10,
**caractérisé en ce que**
le corps de butée (45) s'appuie par le biais d'un ressort (38) dans un corps de buse (32) de la soupape d'injection de carburant (10).
